# EUROPEAN PATENT APPLICATION

(11) **EP 1 107 494 A2**
(43) Date of publication of application: **13.06.2001**
(21) Application number: 00310836.2
(22) Date of filing: 06.12.2000
(51) Int. Cl.: H04J 14/02

(54) **Method and system of communicating management message**

(30) Priority: 06.12.1999 JP 34687499
(71) Applicant: NEC CORPORATION, Tokyo (JP)
(72) Inventor: Yoshiyama, Shunji, Minato-ku, Tokyo (JP)
(74) Representative: Moir, Michael Christopher

(57) **Abstract**

In the system for communicating a management message between nodes in a wavelength-division multiplexing network 1, each of the nodes has a switching unit 101 for switching a transmission path of an optical channel signal carried by the network. The optical channel signal has a frame in compliance with the SDH/SONET standard that stipulates the Data Communication Channel Bytes D4-D12 in the Line Overhead Byte to be allocated for a management message. Each of the nodes includes a termination and generation means for terminating the bytes D4-D12, and extracts a management message from the bytes when each of the nodes receives the optical channel signal. The node judges which optical channel is to carry said management message and incorporates new bytes of the same byte structure as bytes D4-D12 into the optical channel signal in place of the terminated bytes D4-D12. The new bytes are entered with a management message to be carried by the same channel as that of the optical channel signal of interest. The switching unit 101 switches the transmission path to route the optical channel signal together with the new bytes to the destination code.

## Description

### BACKGROUND OF THE INVENTION

The present invention relates to a method of communicating a management message between wavelength-switching nodes in an optical communication network. The present invention also relates to a system to perform the method.

Recently, a WDM (Wavelength-Division Multiplexing) network has been developed in which a plurality of optical signals of different wavelengths is multiplexed to transmit the optical signals by a single transmission line. The optical transmission lines that make up the WDM network have nodes each provided with a wavelength demultiplexer as well as a wavelength multiplexer: the former serves to demultiplex an input multiplexed optical signal into plural optical signals of individual wavelengths, and the latter serves to multiplex a plurality of optical signals to provide a wavelength-division-multiplexed optical signal as an output of the node. The node provided with a demultiplexer and a multiplexer commonly has an optical signal-path switch unit (an optical wavelength ring apparatus). The signal-path switch unit serves to switch between the paths of optical transmission channels established on an optical wavelength basis, with reference to management information, such as the change in the demand for traffic on the transmission line of the optical signal of interest.

Conventionally, however, the usages of a frame and overhead bytes, i.e., the way of allotting information to a frame and overhead bytes,have not been uniquely defined for management information with reference to which the signal-path switch unit performs a switch control.

As a result, it has been impossible to communicate a management message through an optical channel the signal-path switch unit is concerned to.

Thus, a problem encountered has been that a communication of a management message between the signal-path switch units has to be performed through an external network.

In view of the above-described problem, the present invention is directed to providing a method and a system for communicating the management message between signal-path switch units without the aid of any external network.

### SUMMARY OF THE INVENTION

The method of the present invention includes steps of:
defining a byte structure of a frame of an optical channel signal in compliance with a communication standard that stipulates prescribed bytes in an overhead of said optical channel signal to be allotted to a management message, and
   when each of nodes of the optical network receives the optical channel signal,
terminating the prescribed bytes and extracting a management message from the prescribed byte at every recipient node,
judging an optical channel to carry said management message,
incorporating new bytes of the same byte structure as that of the prescribed bytes into the optical channel signal in place for the terminated prescribed bytes, with the new bytes entered with a management message to be carried by the same channel as that of the optical channel signal, at said recipient node, and
switching the transmission path to route the optical channel signal together with the new bytes to the destination node.

Preferably the node further has an add/drop capability of adding a client signal routed from a client apparatus to the network to route the client signal to a destination node as an optical channel signal and dropping an optical channel signal from the network to route the optical channel signal to a destination client apparatus as a client signal.

Under this conditions, the method of the present invention further includes steps of:
defining a byte structure of a frame of the client signal in compliance with the same communication standard as that of the optical channel signal;
   when each of the nodes receives the client signal,
terminating the prescribed bytes and extracting a management message from the prescribed byte at a recipient node,
selecting an optical channel to carry said management message,
incorporating new bytes of the same byte structure as that of the terminated prescribed bytes into the client signal in place of the prescribed bytes, with the new bytes entered with a management message to be carried by the same channel as that of the client signal at the recipient node; and,
switching the transmission path to route the client signal together with the new byte to the destination node as an optical channel signal; and
   when each of the nodes receives an optical channel signal destined to a client apparatus,
terminating the prescribed bytes of the optical channel signal and extracting a management message from the prescribed bytes at a recipient node,
selecting an optical channel to carry said management message,
incorporating new bytes of the same byte structure as that of the prescribed bytes into the optical channel signal in place for the terminated prescribed bytes, with the new bytes entered with a management message to be carried by the same channel as that of the optical channel signal, and
routing the optical channel signal together with the new bytes to its destination client apparatus as a client signal.
It is preferred that the communication standard is the SDH/SONET standard and the prescribed bytes are the Data Communication Channel Bytes in the Line Overhead Byte.

In the system for communicating a management message between nodes in a wavelength-division multiplexing network according to a present invention, each of the nodes has a switching unit for switching a transmission path of an optical channel signal carried by the network,and the optical channel signal has a frame of a byte structure defined in compliance with a communication standard that stipulates prescribed bytes in an overhead of the optical channel signal to be allocated for a management message. Each of the nodes includes:
a first termination and generation means for terminating the prescribed bytes and extracting a management message from the prescribed bytes when each of the nodes receives the optical channel signal selecting an optical channel to carry said management message, and incorporating new bytes of the same byte structure as that of the terminated prescribed bytes into the optical channel signal in place for the prescribed bytes, with the new bytes entered with a management message to be carried by the same channel as that of the optical channel signal.

In this event, the switching means switches the transmission path to route the optical channel signal together with the new bytes to the destination node.

Each of the nodes further includes a second termination and generation means for communicating a management message when a client signal routed from a client apparatus is added to the network as an optical channel signal in order to route the client signal to a destination node and also when an optical channel signal is dropped from the network in order to route the optical channel signal to a destination client apparatus as a client signal.

The client signal is defined to have a frame of a byte structure in compliance with the same communication standard as that of the optical channel signal.

When each of the nodes receives the client signal, the second termination and generation means terminates the prescribed bytes and extracts a management message from the prescribed byte; selects an optical channel to carry said management message; and incorporates new bytes of the same byte structure as that of the terminated prescribed bytes into the client signal in place for the terminated prescribed bytes, with the new bytes entered with a management message to be carried by the same channel as that of the client signal, wherein the switching means switches the transmission path to route the client signal together with the new byte to the destination node as an optical channel signal.

When each of the nodes receives an optical channel signal destined to a client apparatus, the second termination and generation means terminates the prescribed bytes of the optical channel signal and extracts a management message from the prescribed bytes; selects an optical channel to carry said management message; and incorporates new bytes of the same byte structure as that of the terminated prescribed bytes into the optical channel signal in place for the terminated prescribed bytes, with the new bytes entered with a management message to be carried by the same channel as that of the optical channel signal.

In this event, the switching means switches the transmission path to route the optical channel signal together with the new bytes to the destination client apparatus as a client signal.

Each of the termination and generation means preferably has an overhead termination means and an overhead generation means: the overhead termination means terminates an overhead of a received signal; and the overhead generation means generates a new overhead with the same byte configuration as that of the terminated overhead and adds the new overhead to a payload resulting from the overhead-termination of the received signal.

The new overhead has first bytes and second bytes:
the first bytes have the same byte configuration as that of the terminated prescribed bytes to be incorporated into the new overhead in place of the terminated prescribed bytes and entered with a management message to be carried by the same channel as that of the received signal; the second bytes are the bytes of the overhead other than the first bytes and entered with the same information as that of the corresponding bytes of the terminated overhead.

In this system, a request for a management message is transmitted to a network management station by means of the Data Communication Channel Bytes.

The alarm detection information and the performance monitoring information according to the SDH/SONET standard are transmitted to a network management station by means of the Data Communication Channel Bytes.

### BRIEF DESCRIPTION OF DRAWING

Preferred features of the present invention will now be described, by way of example only, with reference to the accompanying drawings, in which:-
Fig. 1 shows a general view of a WDM ring network;
Fig. 2 is a schematic block diagram illustrating an embodiment of an optical signal path-switch unit (OPSU) according to the present invention;
Fig. 3 shows the definition of the section- and line overhead bytes, in the transport overhead byte of the SONET frame defined in Bellcore; and,
Fig. 4 is a schematic diagram showing the way of transmission of the OCh signals provided from CID.

### DETAILED EXPLANATION OF THE PREFERRED EMBODIMENT

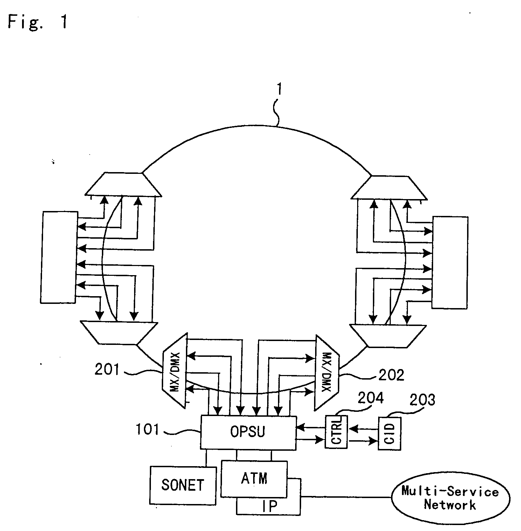

Fig. 1 shows a general view of a WDM ring network 1 in which the method of the present invention is implemented. The network 1 optically couples a plurality of nodes in a ring configuration.

Each of the nodes, as exaggeratively represented in the figure, has an optical signal path-switching unit (OPSU) 101 and optical multiplexing/demultiplexing units (MX/DMXs) 201, 202. Each MX/DMX 201, 202 receives a wavelength multiplexed signal from the ring network 1, demultiplexes it, and supplies the demultiplexed signals to OPSU 101. The MX/DMX 201, 202 also receives the optical signals from OPSU 101 and multiplexes the optical signals to create a wavelength multiplexed signal, which is transmitted through the WDM ring network 1.

In the present invention, each MX/DMX 201, 202 has a software-configurable and SDH/SONET standard-compliant interface.

OPSU 101 has a capability of receiving the demultiplexed optical signals and routing them to their destination addresses. OPSU 101 switches the route of an optical signal in case that a failure occurs in the route of the optical signal.

OPSU 101 also has software-configurable add/drop capabilities: an optical layer add/drop capability in compliance with the SDH/SONET standard and an electrical layer add/drop capability. In this way, OPSU 101 provides interfaces open to multi-service environments such as the SONET, an ATM network and an IP network.

OPSU 101 of the present invention comes with CID (craft interface device) 203 and CTRL (control unit) 204. CID 203 serves as a terminal for entering an instruction to request a management message to an intended node as well as a management data item to be sent to an intended node. CTRL 204 is installed with a system controller package, and controls OPSU 101 to operate in accordance with the instruction received from CID 203.

It is presumed in the present invention that both the optical channel signal (an optical signal carried by the WDM optical ring network 1) and the client signal (a signal added to or dropped from the optical network through OPSU 101) are defined in compliance with the SDH/SONET standard. This presumption ensures that both the optical channel signal and the client signal can be transmitted at the same bit rate, thereby enabling OPSU 101 to be connected with an SDH/SONET standard-compliant interface of each MX/DMX 201, 202.

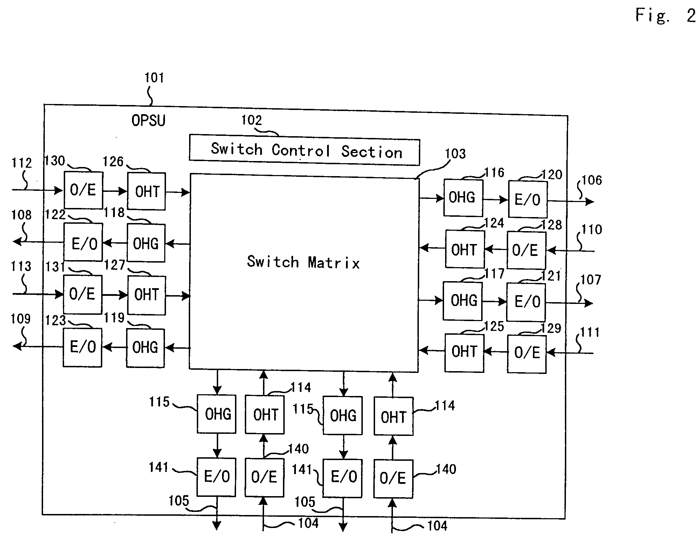

Fig. 2 is a schematic block diagram illustrating an embodiment of an optical signal path-switch unit (OPSU) 101 according to the present invention.

OPSU 101 is provided with switch control section 102, switch matrix 103 and the interface sections both between OPSU 101 and the client apparatus or apparatuses and between OPSU 101 and optical ring network 1.

Switch control section 102 controls switch matrix 103 to route the received optical signals to their destination nodes or destination client apparatuses. The switch control is performed with reference to the information described in the overheads that have been removed from the payloads of the received optical signals by the termination procedure at the interface sections, as will be described below. (The connections between switch control section 102 and the interface sections are not depicted in the figure for simplicity.) Switch control section 102 controls switch matrix 103 to switch the transmission path of an optical signal in case that a failure occurs in the route of the optical signal.

Switch control section 102 is , in addition, connected to CTRL 204 (cf. Fig. 2) and controls switch matrix 103 so that the instruction entered from CID 203 can be executed.

A first interface section is provided with optoelectric conversion sections (0/Es) 140, overhead termination sections (OHTs) 114, electro-optical conversion sections (E/Os) 141 and overhead generating sections (OHG) 115 for optical client signals.

O/E 140 receives an optical client signal 104 compliant with the SDH/SONET standard, converts the optical client signal to an electric client signal. OHT 114 receives the electric client signal, terminates the overhead bytes of the electric client signal and transmits the payload bytes to switch matrix 103. OHT 114 has, in addition to the overhead-byte termination function, the functions of alarm detection and performance monitoring according to the SDH/SONET standard.

OHG 115 receives payload bytes of the signal destined to a client apparatus from switch matrix 103, adds an overhead for the destination client apparatus in compliance with the SDH/SONET standard.

A second interface section is provided with optoelectric conversion sections (O/Es) 128, 129, 130 and 131; overhead termination sections (OHTs) 124, 125, 126 and 127; electro-optical conversion sections (E/Os) 120, 121, 122 and 123; and overhead generating sections (OHGs) 116, 117, 118 and 119 for the demultiplexed optical channel (OCh) signals.

Each of O/Es 128-131 converts a received OCh signal into an electrical OCh signal. Each of OHTs 124-127 terminates overhead bytes in the SDH/SONET frame of the electric signal received from corresponding O/E 128-131.

The payload of the optical signal, the overhead of which has been terminated, is transferred to the OHG allotted to the optical channel for communicating with the destination node of the optical signal.

Each of OHGs 116-119 and 115 generates a new overhead to be added to the received payload. The new overhead is structured in compliance with the SDH/SONET standard in which definitely defined bytes (D4-D12 bytes in the line overhead, as will be described later) are allotted to a management message. Hereinafter, the bytes in the overhead of the SDH/SONET frame allotted to the management message are referred to as management message bytes and the bytes of the overhead other than the management message bytes are referred to as payload-pertinent bytes.

The same information is written in the payload-pertinent bytes of the new overhead as that written in the corresponding bytes of the terminated overhead.

In the management message bytes of the new overhead, in contrast, no management message is written in case that there is no management message to be carried by the same optical channel as that of the optical signal concerned in order to route the management message to its destination node or client apparatus. If, on the other hand, there is a management message to be carried on the same channel as that of the optical signal concerned, such a management message is written in the management message bytes and is sent to the next node or the client apparatus of interest along with the payload. In this way, the management message is routed from OPSU 101.

Each of E/Os 120, 121, 122 and 123 converts the electric signal received from the corresponding OHG to an optical signal and supplies it to MX/DMX 201 or 202.

Thus, while the overhead termination and overhead generation are repeated as an optical signal is transported from node to node, OPSU 101 is transparent to the payload and the payload-pertinent bytes. If, however, the optical channel to carry the management message bytes changes as an optical signal is transmitted from node to node, the management message will be dropped from the current overhead.

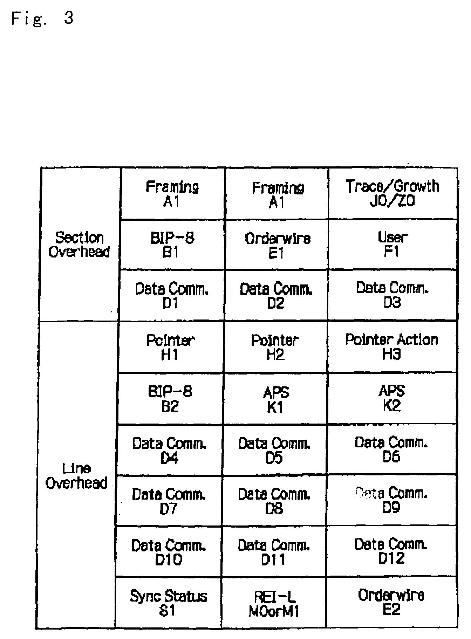

For reference purpose, Fig. 3 shows the definition of the section- and line overhead bytes in the transport overhead byte of the SONET frame defined in Bellcore (Bell Communication Research), GR-253, Issue 2. The line data communication channel bytes D4-D12 in the Line Overhead are employed for the transmission of the management message in the present invention.

In operation, when the optical client signal in compliance with the SDH/SONET standard is supplied from a client apparatus (not shown) to OPSU 101, the optical client signal is converted to an electric client signal at O/E 140. The overhead bytes in the SDH/SONET frame of the electric client signal are terminated at OHT 114. OHT 114 performs, in addition to the overhead-byte termination function, the functions of alarm detection and performance monitoring according to the SDH/SONET standard.

The payload of the optical signal, the overhead of which has been terminated, is next delivered to switch matrix 103.

Switch control section 102 controls switch matrix 103 with reference to the terminated overhead to transfer the payload of interest to one of the OHGs (116-119) allocated for a communication with the destination node of the payload.

A new overhead is added to the payload by the OHG of interest, whereby an optical signal is configured.

The payload-pertinent bytes of the terminated overhead are rewritten to the payload-pertinent bytes of the new overhead as is at the OHG that handles the payload.

If a management message to be carried by the same channel as that of the payload of interest is present, the management message is written in the line data communication channel bytes D4-D12 (the management message bytes) in the line overhead of the new overhead. If such a management message is not present, nothing is written in the D4-D12 bytes of the new overhead.

The output of the OHG is converted into an optical signal at the corresponding one of E/Os (120-123) and the output of the E/O (one of 106-109) is sent to the corresponding one of MX/DMXs 201, 202.

In this way, the management message is carried along with an optical signal to the next node.

Next, we will set forth the case where an optical channel signal 110, 111, 112 or 113 is sent to a client apparatus.

Optical channel signal 110, 111, 112 or 113, supplied from one of MX/DMXs 201, 202 is converted to electric signals (referred to as an electric OCh signal) in optoelectric (O/E) conversion section 128, 129, 130 or 131 on the input side of OPSU 101. OHT 124, 125, 126 or 127 terminates the overhead of the electric OCh signal. The management message information destined to the node of interest is taken out from the terminated overhead.

The signal-path switching data included in the overhead is delivered to switch control section 102 from OHT 124, 125, 126 or 127. The signal-path switching data serves to judge the way of switching the switch section 103. The payload of the electric OCh signal is entered to switch section 103. Switch control section 102 directs the payload to OHG 115 allocated for a client signal. OHG for client signal 115 adds a new SDH/SONET-standard overhead to the payload of interest.

The information that has been born in the payload-pertinent bytes of the terminated overhead is rewritten to the corresponding bytes of a new overhead as is. A management message destined to the client apparatus is written to the management message bytes D4-D12 of the new overhead.

The output of the OHG 115 is converted into an optical signal at E/O 141. The output 105 of E/O 141 is transmitted to the destination client apparatus.

In this way, a transmission path for a management message can be established through an optical channel on the optical network by employing overhead bytes of the frame defined for the optical channel.

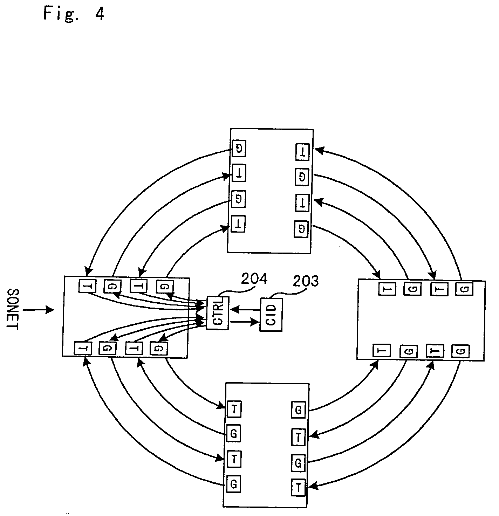

Fig. 4 shows a schematic diagram illustrative of the transmission path of the line data communication channel bytes D4-D12 (the management message bytes).

In Fig. 4, the four nodes are assumed to be identical in construction, and the diagrammatic representation of the multiplexing/demultiplexing operation is omitted for simplicity. The notations T and G refer to OHT and OHG, respectively.

When a request for a management message is entered from CID (craft interface device) 203, switch control section 102 controls the switch matrix 103 to enter the request into OHG. In this way, the request is routed together with an optical channel signal to the node associated with the network management station (not shown) node by node repeating the termination and generation of the overhead using the management message bytes D4-D12 in the Line Overhead Byte (cf. Fig. 3). The requested management data is supplied from the network management station by employing the bytes D4-D12 as well. In Fig. 4, the diagram exaggeratively shows that the overhead-termination and -generation are repeatedly performed in every node.

As described above, an establishment of a management message path between client apparatuses can be achieved through an optical transmission channel by defining an optical channel frame to be compliant with the SDH/SONET standard; terminating the overhead bytes of the frame of a client signal (defined in compliance with the SDH/SONET standard) supplied from a client interface; and adding a new overhead bytes to the optical channel frame of interest. As a result, the present invention does away with the need for connecting all of the optical signal-path switching nodes, which make up an optical network, with an external network such as an external LAN ( a local area network) or X.25 to constitute a management network.

In the network configuration described above, the external network requires having only gateways to a management system connected thereto.

In addition, since the bit rate of the client signals 104 and 105 equals that of OCh signals 106-109 and 110-113, it is possible to connect a client apparatus to an interface of a wavelength multiplexing/demultiplexing apparatus pursuant to the SDH/SONET standard.

While Fig. 3 refers to the SONET frame, the line data communication channel bits are defined in the overhead bytes of the SDH frame as well, as is the case with the SONET frame. Accordingly, similar measures can be applied to the case where the optical signal path-switching unit receives a signal compliant with the SDH standard from a client apparatus.

In summary, the optical signal path-switching unit of the present invention performs the following procedures: terminating the management message byte information of an OCh signal and a client signal described in the frame compliant with the SDH/SONET standard; adding new overhead bytes to the payload of the signal of interest; writing a management message to be carried on the same channel as that of the payload in the management message bytes D1-D12 of the new overhead; and employing the written management message byte information for the communication of the management message.

In this way, the communication path of the management message can be established between the nodes in the optical transmission network, thereby allowing the communication of the management message to be performed without employing any external network.

It is to be understood, however, that although the characteristics and advantages of the present invention have been set forth in the foregoing description, the disclosure is illustrative only, and changes may be made in the steps of the method and the arrangement of the parts in the apparatus within the scope of the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

In the system for communicating a management message between nodes in a wavelength-division multiplexing network, each of the nodes has a switching unit for switching a transmission path of an optical channel signal carried by the network. The optical channel signal has a frame in compliance with the SDH/SONET standard that stipulates the Data Communication Channel Bytes in the Line Overhead Byte to be allocated for a management message. Each of the nodes includes a termination and generation means for terminating the bytes, and extracts a management message from the bytes when each of the nodes receives the optical channel signal. The node judges which optical channel is to carry said management message and incorporates new bytes of the same byte structure as bytes into the optical channel signal in place of the terminated bytes. The new bytes are entered with a management message to be carried by the same channel as that of the optical channel signal of interest. The switching unit switches the transmission path to route the optical channel signal together with the new bytes to the destination code.

## Claims

1. A method of communicating a management message between nodes in a wavelength division multiplexing network, said node having means for switching a transmission path of an optical channel signal carried by said network,
including steps of:
defining a byte structure of a frame of said optical channel signal in compliance with a communication standard that stipulates prescribed bytes in an overhead of said optical channel signal to be allotted to a management message, and
when each of said nodes receives said optical channel signal,
terminating said prescribed bytes and extracting a management message from said prescribed bytes at every recipient node,
selecting an optical channel to carry said management message,
incorporating new bytes of the same byte structure as that of said terminated prescribed bytes into said optical channel signal in place of the terminated prescribed bytes, with said new bytes entered with a management message to be carried by the same channel as that of said optical channel signal, at said recipient node, and
switching said transmission path to route said optical channel signal together with said new bytes to said destination node.

2. A method as claimed in claim 1, wherein said node further has an add/drop capability of adding a client signal routed from a client apparatus to said network to route the client signal to a destination node as an optical channel signal and dropping an optical channel signal from said network to route the optical channel signal to a destination client apparatus as a client signal, and said method further includes steps of:
defining a byte structure of a frame of said client signal in compliance with the same communication standard as that of said optical channel signal;
when each of said nodes receives said client signal,
terminating said prescribed bytes and extracting a management message from said prescribed byte at a recipient node,
selecting an optical channel to carry said management message,
incorporating new bytes of the same byte structure as that of the terminated prescribed bytes into said client signal in place of said prescribed bytes, with said new bytes entered with a management message to be carried by the same channel as that of said client signal at said recipient node, and
switching said transmission path to route said client signal together with said new bytes to said destination node as an optical channel signal; and
when each of said nodes receives an optical channel signal destined to a client apparatus,
terminating said prescribed bytes of said optical channel signal and extracting a management message from said prescribed bytes at a recipient node,
selecting an optical channel to carry said management message,
incorporating new bytes of the same byte structure as that of said prescribed bytes into said optical channel signal in place for the terminated prescribed bytes, with said new bytes entered with a management message to be carried by the same channel as that of said optical channel signal, and
routing said optical channel signal together with said new bytes to its destination client apparatus as a client signal.

3. A method as claimed in claim 1, wherein said communication standard is the SDH/SONET standard and said prescribed bytes are the Data Communication Channel Bytes in the Line Overhead Byte.

4. A system for communicating a management message between nodes in a wavelength division multiplexing network, each of said nodes having a switching means for switching a transmission path of an optical channel signal carried by said network, said optical channel signal having a frame of a byte structure defined in compliance with a communication standard that stipulates prescribed bytes in an overhead of said optical channel signal to be allocated for a management message, each of said nodes including:
a first termination and generation means for terminating said prescribed bytes and extracting a management message from said prescribed bytes when each of said nodes receives said optical channel signal, selecting an optical channel to carry said management message, and incorporating new bytes of the same byte structure as that of said terminated prescribed bytes into said optical channel signal in place of said prescribed bytes, with said new bytes entered with a management message to be carried by the same channel as that of said optical channel signal, wherein said switching means switches said transmission path to route said optical channel signal together with said new bytes to said destination node.

5. A system for communicating a management message as claimed in claim 4, each of said nodes further including a second termination and generation means for communicating a management message when a client signal routed from a client apparatus is added to said network as an optical channel signal in order to route the client signal to a destination node and also when an optical channel signal is dropped from said network in order to route the optical channel signal to a destination client apparatus as a client signal, said client signal being defined to have a frame of a byte structure in compliance with the same communication standard as that of said optical channel signal,
said second termination and generation means, when each of said nodes receives said client signal,
terminating said prescribed bytes and extracting a management message from said prescribed bytes,
selecting an optical channel to carry said management message,
incorporating new bytes of the same byte structure as that of the terminated prescribed bytes into said client signal in place for said prescribed bytes, with said new bytes entered with a management message to be carried by the same channel as that of said client signal,
wherein said switching means switches said transmission path to route said client signal together with said new bytes to said destination node as an optical channel signal; and
said second termination and generation means, when each of said nodes receives an optical channel signal destined to a client apparatus,
terminating said prescribed bytes of said optical channel signal and extracting a management message from said prescribed bytes,
selecting an optical channel to carry said management message,
incorporating new bytes of the same byte structure as that of said prescribed bytes into said optical channel signal in place for the terminated prescribed bytes, with said new bytes entered with a management message to be carried by the same channel as that of said optical channel signal,
wherein said switching means switches said transmission path to route said optical channel signal together with said new bytes to said destination client apparatus as a client signal.

6. A system for communicating a management message as claimed in claim 5, wherein each of said termination and generation means has an overhead termination means and an overhead generation means, said overhead termination means terminating an overhead of a received signal and said overhead generation means generating a new overhead with the same byte configuration as that of the terminated overhead and adding said new overhead to a payload resulting from the overhead-termination of said received signal, and wherein said new overhead has first bytes and second bytes, said first bytes having the same byte configuration as that of the terminated prescribed bytes to be incorporated into said new overhead in place of said terminated prescribed bytes and entered with a management message to be carried by the same channel as that of said received signal, and said second bytes being the bytes of said overhead other than said first bytes and entered with the same information as that of the corresponding bytes of said terminated overhead.

7. A system for communicating a management message as claimed in claim 6, wherein said communication standard is the SDH/SONET standard and said prescribed bytes is the Data Communication Channel Bytes in the Line Overhead Byte.

8. A system for communicating a management message as claimed in claim 7, wherein a request for a management message is transmitted to a network management station by means of said Data Communication Channel Bytes.

9. A system for communicating a management message as claimed in claim 7, wherein the alarm detection information and the performance monitoring information according to the SDH/SONET standard are transmitted to a network management station by means of said Data Communication Channel Bytes.
